# EUROPEAN PATENT APPLICATION

(11) **EP 1 030 416 A2**
(43) Date of publication of application: **23.08.2000**
(21) Application number: 00103167.3
(22) Date of filing: 16.02.2000
(51) Int. Cl.: H01S 3/094, H01S 3/067

(54) **Laser amplifier and laser oscillator**

(30) Priority: 17.02.1999 JP 3873399
(71) Applicant: NEC CORPORATION, Tokyo (JP)
(72) Inventor: Kasamatsu, Tadashi, c/o NEC Corporation, Tokyo (JP)
(74) Representative: Glawe, Delfs, Moll & Partner

(57) **Abstract**

A laser amplifier including a gain medium (11) containing a rare-earth element, and an Yb-doped solid-state laser (12) functioning as an excitation light source for obtaining a laser gain of the laser amplifier. Since the ytterbium-doped solid-state laser is utilized as the excitation light source, the compact and versatile laser amplifier and the laser oscillator are provided.

## Description

### BACKGROUND OF THE INVENTION

### (a) Field of the Invention

The present invention relates to a laser amplifier and a laser oscillator for use in an optical communication system.

### (b) Description of the Related Art

A laser amplifier (for example, a fiber amplifier) and a laser oscillator (for example, a fiber laser and a solid-state laser) which employ a gain medium containing a rare- earth element such as erbium (Er), holmium (Ho), thulium (Tm) and praseodymium (Pr) are key devices promising in various technical fields such as optical telecommunication and a laser medical treatment.

Especially, in the optical telecommunication system, a fiber amplifier having multi-functions and high performances is demanded. For example, in a silica fiber amplifier containing erbium for wavelength division multiplexing communication, a watt-level saturated output is required with the increase of the number of wavelengths in the multiplexing. On the other hand, research and development in connection with the increase of the wavelength range used for the optical communication is progressing. In addition to the erbium amplifier, a fiber amplifier having a 1.3 µm-range which employs fluoride fibers including doped praseodymium (Oishi, "The Review of Laser Engineering" vol.25, No.2, p.139∼, 1997), and a fiber amplifier having a 1.7 µm-range which employs fluoride fibers including doped thulium (Japanese Patent No.2,688,303) have been developed.

Realization of the various fiber amplifiers necessitates excitation light sources having various requested functions for exciting the fiber amplifier. The above described fiber amplifier having the watt-level saturated output naturally requires the excitation light source having a high output power on the order of several watts. In order to excite the praseodymium and the thulium, another excitation light source having an oscillation wavelength (1020 nm to 1050 nm) different from a conventional wavelength (980 nm to 1480 nm) is requested. In the optical telecommunication systems in the practical use, various restrictions exist such as dimensions and efficiencies of the fiber amplifier and the excitation light source.

Conventional problems in connection with the excitation light source will be separately described. The output power of a current semiconductor device is restricted to about 100 mW to 200 mW. This is because factors for restricting outputs such as facet destruction and reduction of output due to thermal interference appear more noticeably at a higher output. Higher output oscillation at a wavelength suitable for exciting the praseodymium and the thulium has not been realized. In a range between 1020 and 1050 nm, there are excitation wavelength bands of the various fiber amplifiers including such as the praseodymium (most appropriate wavelength: 1020 to 1030 nm), the thulium (most appropriate wavelength: 1050 nm) and ytterbium (Yb)-doped erbium (most appropriate wavelength: 800 to 1100 nm). However, a higher output semiconductor laser has not been developed other than the 980 nm semiconductor laser.

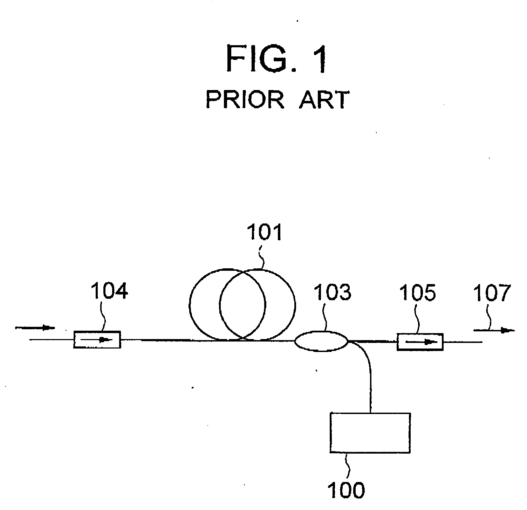

On the other hand, a solid-state laser and a double-clad structured fiber laser having a multi-mode semiconductor laser as an excitation light source are known as light sources in which increase of the output power is relatively easy (Fig.1). A fiber amplifier shown in Fig.1 includes an Yb-doped solid-state laser 100 for exciting a semiconductor laser as an excitation light source, a first isolator 104, a second isolator 105, a wavelength multiplexing coupler 103 and an amplification fiber 101. However, a neodymium (Nd)-doped solid crystal (YAG; Y₃Al₅O₁₂ or YLF crystal) has been heretofore mainly used in the solid-state laser. An output power of about 10 W is obtained by means of diffraction-limited beams in the Nd-doped solid-state laser of the product level, and the request for providing the output as the light source for exciting the fiber amplifier of the telecommunication can be satisfied. However, the upper limit of the conversion efficiency from the optical input to the optical output of the Nd-doped solid-state laser is 76 %, which is a quantum efficiency possessed by the Nd, and cannot exceed the value. The oscillation wavelength is fixed at 1064 nm for Nd:YAG, 1047 nm or 1053 nm for Nd: YLF, and is out of the desired wavelength range in which the various fiber amplifiers can be excited at a high efficiency. Because of having no wavelength variability, the applicable range is naturally restricted.

On the other hand, the double clad structured silica fiber laser containing the doped neodymium and ytterbium has a higher output over 10 W, a wider wavelength variability (1020 nm to 1100 nm) and a higher efficiency based on a higher quantum efficiency of the ytterbium, and accordingly is predominant as the excitation light source. However, the typical length of the Yb-doped fiber is about 10 m to 40 m. Considering the minimum bend radius of a reel (winding-up jig) for accommodating the fiber and a necessity of requiring the excitation optical system, the silica fiber laser can be hardly miniaturized to the semiconductor laser size.

In order to provide various fiber amplifiers having a higher output, a higher efficiency and a smaller size, an excitation light source having a proper excitation wavelength for exciting the various fiber amplifiers having the higher output, the higher efficiency and the smaller size has been demanded.

### SUMMARY OF THE INVENTION

In view of the foregoing, an object of the present invention is to provide a compact excitation light source having an oscillation wavelength suitable for exciting a rare-earth element-doped laser amplifier and a rare-earth element-doped laser oscillator at a higher output and a higher efficiency, and the laser amplifier and the laser oscillator having the excitation light source.

The present invention provides, in a first aspect thereof, a laser amplifier including a gain medium containing a rare-earth element, and an Yb-doped solid-state laser functioning as an excitation light source for obtaining a laser gain of the laser amplifier.

The present invention provides, in a second aspect thereof, a laser oscillator including a gain medium containing a rare-earth element to which an excitation ray is supplied for conducting laser oscillation, and an ytterbium-doped solid-state laser functioning as an excitation light source for obtaining a laser gain of the laser amplifier.

In accordance with the present invention, since the ytterbium-doped solid-state laser for exciting the semiconductor laser is utilized as the excitation light source, the compact and versatile laser amplifier and the laser oscillator are provided. Thereby, a fiber amplifier and a transmission system responding to a larger capacity can be provided.

The above and other objects, features and advantages of the present invention will be more apparent from the following description.

### BRIEF DESCRIPTION OF DRAWINGS

Fig.1 is a schematic diagram showing a conventional fiber amplifier.
Fig.2 is a schematic diagram showing a fiber amplifier in accordance with a first embodiment of the present invention.
Fig.3 is a schematic diagram of the fiber amplifier in Fig.2 wherein an interior of an Yb-doped solid-state laser is shown more in detail.
Fig.4 is a graph showing characteristics of an Yb:YAG laser which is a light source for exciting the laser amplifier of the present invention.
Figs.5A and 5B are graphs showing oscillation spectra of the Yb:YAG laser at 1030 nm and 1050 nm.
Fig.6 is a schematic diagram showing a fiber amplifier in accordance with a second embodiment of the present invention.
Fig.7 is a graph showing output characteristics of the fiber amplifier of the present invention.
Fig.8 is a graph showing a dependency of a signal gain and a noise figure on an input signal wavelength.
Fig.9 is a schematic diagram showing a fiber amplifier in accordance with a fourth embodiment of the present invention.
Fig.10 is a schematic diagram showing a fiber amplifier in accordance with a fifth embodiment of the present invention.
Fig.11 is a schematic diagram showing an example of a fiber amplifier in accordance with the present invention including a compact Yb:YAG laser.
Fig.12 is a schematic diagram showing another example of a fiber amplifier in accordance with the present invention including a compact Yb:YAG laser.

### PREFERRED EMBODIMENTS OF THE INVENTION

Before describing preferred embodiments of the present invention, the principle of the present invention will be described for a better understanding.

The problems can be solved in the present invention by extracting characteristics not found in the prior art by using spectroscopic characteristics possessed by an ytterbium (Yb)-doped solid-state laser.

The energy level structure of the ytterbium includes only two levels, that is, a ground level ²F_{7/2} and an excitation level ²F_{5/2} which is higher than the ground level by an energy difference of about 10,000 cm⁻¹. Accordingly, an excitation wavelength (940 nm) and a laser oscillation wavelength (main oscillation wavelength: 1030 nm) are excessively close to each other and non-radiative relaxation is excessively small, and the ytterbium has a quantum efficiency over 90 % (refer to "Optics Letters" vol.16, no.14, p.1089, 1991 written by T. Y. Fan for details) to enable a higher efficiency operation of the Yb-doped solid-state laser. Further, since the Yb-doped solid-state laser has a higher absorption coefficient (to the excitation ray wavelength) about 10 times that of a Nd-doped solid-state laser, the size of the medium can be reduced to about several hundred µm. Due to the high quantum efficiency, an amount of generated heat is excessively small and is about 1/3 to 1/4 compared with that of the Nd-doped solid-state laser. Accordingly, even if the size of the solid crystal of the Yb-doped solid-state laser is reduced to about several hundred µm, crystal crush due to the heat generation does not occur. The excessively small Yb-doped crystal can be closely arranged to the semiconductor laser for excitation to realize a size similar to that of the semiconductor laser. The both of them can be packed in a single package.

The fluorescent spectrum of the ytterbium broadly extends from 1020 nm to 1050 nm, and the oscillation wavelength can be varied in this wavelength range. Therefore, a variety of fiber amplifiers (for example, including a thulium-doped fluoride fiber, a praseodymium-doped fluoride fiber and an erbium-ytterbium-doped silica fiber) can be excited. Since a higher ytterbium population inversion rate can be obtained which is higher than that obtained in the excitation at a longer wavelength side than 1030 nm, a mainstream of the conventional erbium-ytterbium-doped silica fiber amplifier, by employing the wavelength of 1030 nm as the oscillation wavelength, a low noise amplifier can be obtained.

An ytterbium-doped YAG (Y₃Al₅O₁₂) is preferably employed as a laser crystal used in the ytterbium-doped solid-state laser in the present invention, and Yb:YLF and YB:Lu₃Al₅O₁₂ can be also employed. The latter compounds commonly have the spectroscopic characteristics of the Yb and a similar function can be obtained by a similar constitution.

The laser medium of the ytterbium-doped solid-state laser of the present invention preferably includes a microchip structure. The microchip structure enables a multi-mode semiconductor laser for excitation to be in close proximity to the microchip crystal to be directly excited, and the microchip crystal can be also excited by using a micro-lens.

The rare-earth element contained in the medium of the present invention includes, for example, thulium, praseodymium and combination of erbium and ytterbium.

The structure of the medium includes silica glass and fluorozirconate glass containing the rare-earth element. A laser amplifier and a laser oscillator useful in an optical telecommunication system can be obtained when the medium is formed by optical fibers.

Further, a higher efficiency amplifying operation in broader band optical telecommunication can be realized by connecting a plurality of the laser amplifiers in series or in parallel.

Now, the present invention is more specifically described with reference to accompanying drawings.

### First Embodiment

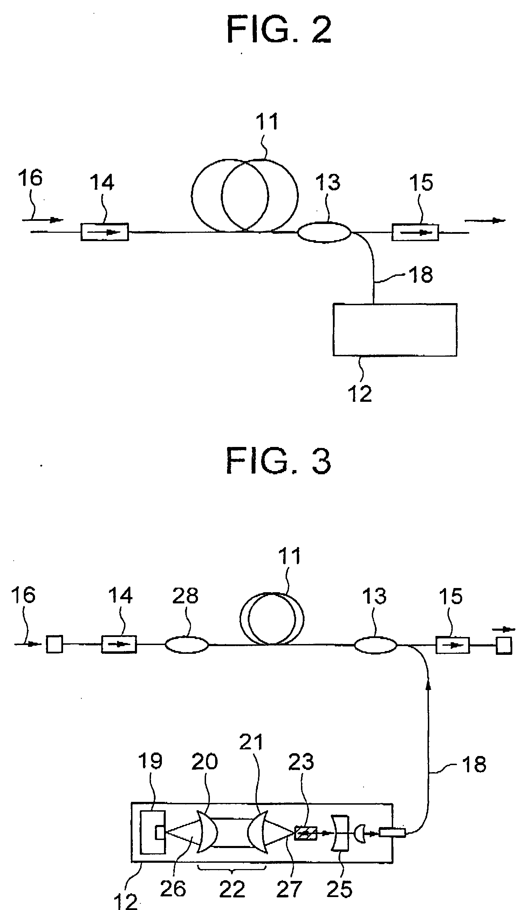

A fiber amplifier in accordance with a first embodiment of the present invention shown in Fig.2 includes an Yb-doped solid-state laser 12 for exciting a semiconductor laser as an excitation light source, a first isolator 14, a second isolator 15, a wavelength multiplexing coupler 13 and an amplification fiber 11 (sometimes referred to as "amplifying element"). In the present embodiment, an Yb:YAG (Yb: Y₃Al₅O₁₂) will be described as an example. However, the present invention should not be restricted to the Yb:YAG laser and may be similarly applied to other Yb-doped solid-state lasers (Yb:YLF, Yb: Lu₃Al₅O₁₂) because the spectroscopic characteristics of the Yb are commonly possessed.

Referring to Fig.3 showing an interior of the Yb-doped solid-state laser 12 of Fig.2 in detail, excitation beams 26 from a multi-mode semiconductor laser 19 are gathered for exciting an Yb:YAG crystal 23 by means of an excitation optical system 22 including a collimate lens 20 and a convergent lens 21. A laser resonator is constituted by a rear mirror coat 27 formed on the incident side of the excitation beams and an output mirror 25 to conduct Yb:YAG laser resonator.

In an experiment, the multi-mode semiconductor device 19 having an output of 3.2 W and a wavelength of 940 nm, and the Yb:YAG crystal 23 having a length of 3 mm were used, and the laser resonator having a length of 50 mm and an output mirror reflectivity of 90 % was formed. As the Yb:YAG laser output, 1.05 W (@1030 nm) was obtained.

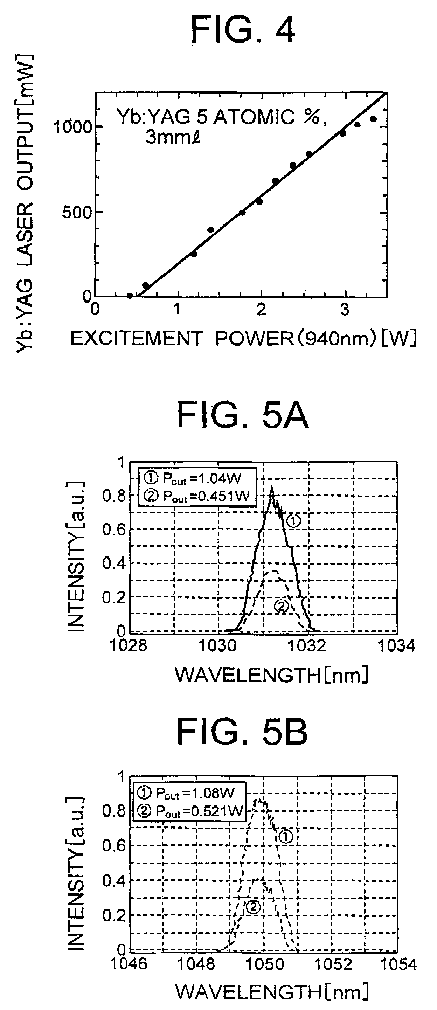

Input-output characteristics obtained by the experiment are shown in a graph of Fig.4. An optical to optical conversion efficiency of 33 % and a slope efficiency of about 40 % were obtained, and accordingly, an extremely high efficiency operation was achieved. An excellent TEM₀₀ operation having a beam quality factor M² value of 1.1 was realized, and the beams could be coupled on the single-mode fiber 18 at an efficiency of about 90%.

The extremely broad fluorescent band of the Yb:YAG enables an successive wavelength tunable operation from 1020 nm to 1050 nm without a break by inserting a wavelength selection element such as a prism, an etalon and a diffraction grating into the laser resonator. Actually, an output variation in the wavelength region was about 20 %. Examples of the wavelength tuning were shown in Figs.5A and 5B. In both cases, Yb:YAG laser outputs over 1W were obtained at 1030 nm and 1050 nm.

Then, an amplification operation of the erbium-doped silica fiber amplifier (1.55 µm range) having the Yb:YAG laser as the excitation light source in accordance with the present invention will be described.

An ordinary excitation wavelength of an erbium fiber is 980 nm or 1480 nm. A strong absorption band can be made in a wavelength band between 800 nm and 1100 nm by adding ytterbium into the erbium-doped silica fiber (Er-Yb fiber). The Er-Yb fiber can be excited by converting the oscillation wavelength of the Yb:YAG laser from 1030 nm to 1050 nm. When the Yb:YAG laser of the 1030 nm oscillation was employed as an excitation light source, a fiber length could be reduced to 1/2 to 1/3 compared with that when the excitation was induced by Nd:YAG (1064 nm) or Nd:YLF (1047 nm). This is because an absorption coefficient of the Er-Yb fiber at 1030 nm is larger than the above wavelengths by one order (refer to P.R.Morkel, OPTICAL AMPLIFIERS AND THEIR APPLICATIONS, paper FD2, 1992). By reducing the fiber length, reduction of background loss can be expected to enable a higher efficiency operation of the fiber amplifier. While a fiber having a length of 30 m was required at 1064nm-Nd:YAG laser excitation, a fiber having a length of only about 15 m was sufficient at 1030 nm excitation. The background loss of the rare-earth element-doped fiber at the 1030 nm excitation was between 0.05 dB/m and 0.1 dB/m which was higher by 0.75 to 1.5 dB (about 20 %) and the efficiency at 1030 nm was higher.

An amplification experiment was conducted by employing the apparatus shown in Fig.3. A Yb:YAG laser ray 16 was incident on the amplification fiber 11 by way of a wavelength division multiplexing coupler 28 (a rear excitation was employed, but a direction of the excitation does not influence the function of the present invention). In the experiment, an Er-Yb fiber was used as the amplification fiber 11. Parameters of the fiber were such that an Er concentration was 300 ppm and an Yb concentration was 6000 ppm, a core diameter was 5 µm and NA was 0.2. As a light source of the signal ray 16, a 1.55 µm range wavelength variable semiconductor laser was used. At the Yb:YAG laser output of 500 mW, the 1.55 µm range amplification output of 150 mW was obtained. The input signal 16 had a wavelength of 1534 nm and power of 9 dBm, and a slope efficiency was 37 %. Accordingly, a higher efficiency operation by means of the Yb:YAG laser excitation was proved.

### Second Embodiment

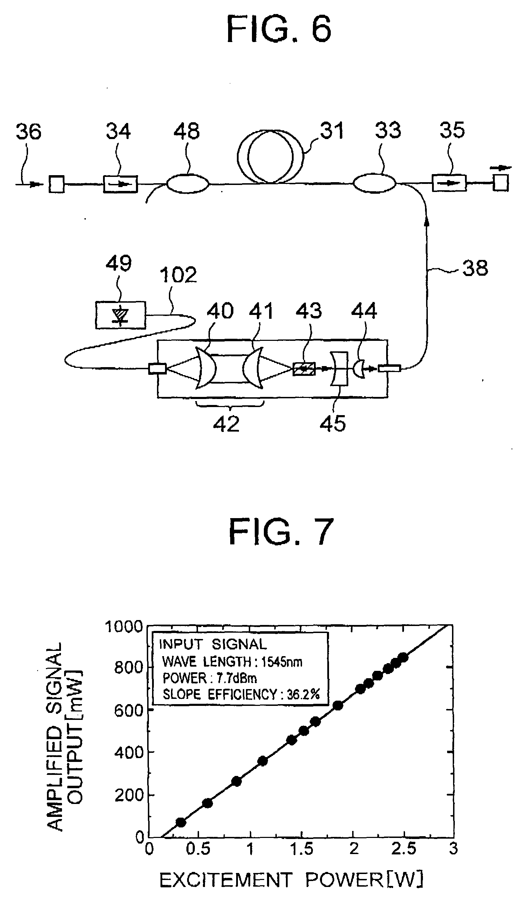

A configuration of a fiber amplifier in accordance with a second embodiment is shown in Fig.6 having an Yb:YAG laser in which a fiber coupled semiconductor laser is employed as an excitation light source.

The fiber amplifier of the second embodiment includes an Yb-doped solid-state laser for exciting a semiconductor laser as an excitation light source, a first isolator 34, a second isolator 35, a wavelength division multiplexing coupler 33 and an amplification fiber 31. In the present embodiment, a fiber coupled multi-mode semiconductor laser 49 having an output of 12 W, a wavelength of 940 nm, a fiber core diameter of 400 µm and an NA of 0.33 was used as the excitation light source.

The configuration of a resonator is similar to that of the first embodiment. That is, excitation beams from the multi-mode semiconductor laser 49 were gathered for exciting an Yb:YAG crystal 43 by means of an excitation optical system 42 including a collimate lens 40 and a convergent lens 41. A laser resonator was constituted by a rear mirror coat (not shown) formed on the incident side of the excitation beams of a Yb:YAG crystal 43 to conduct Yb:YAG laser resonation. Such a resonator configuration provided an Yb:YAG laser output of 3.1 W and a single-mode output of 2.4 W. When a 1.55 µm range amplification experiment employing the above resonator as the excitation light source was conducted, the maximum output of 850 mW (+29.3 dBm, input signal: 1545 nm, 7.7 dBm) and a higher slope efficiency of 36 % were obtained as shown in Fig.7. The applicability of the Yb:YAG laser to the excitation light source of a watt-level fiber amplifier has been sufficiently exhibited.

A lower noise could be generated than that of the 1060nm-Nd:YAG laser excitation fiber amplifier by establishing the wavelength of the Yb:YAG laser apparatus ranging from to 1030 nm to 1050nm. Since an ytterbium reversed distribution rate increased with the approach to a wavelength of 980 nm, the lower noise generation due to ASE could be attained in the 1030nm-Yb:YAG excitation than in the 1050-1060nm solid-state laser excitation (Nd:YAG and Nd:YLF). Further detail is obtained in a publication of P.F.Wysocki, et. al., OFC '96, paper TuG6.

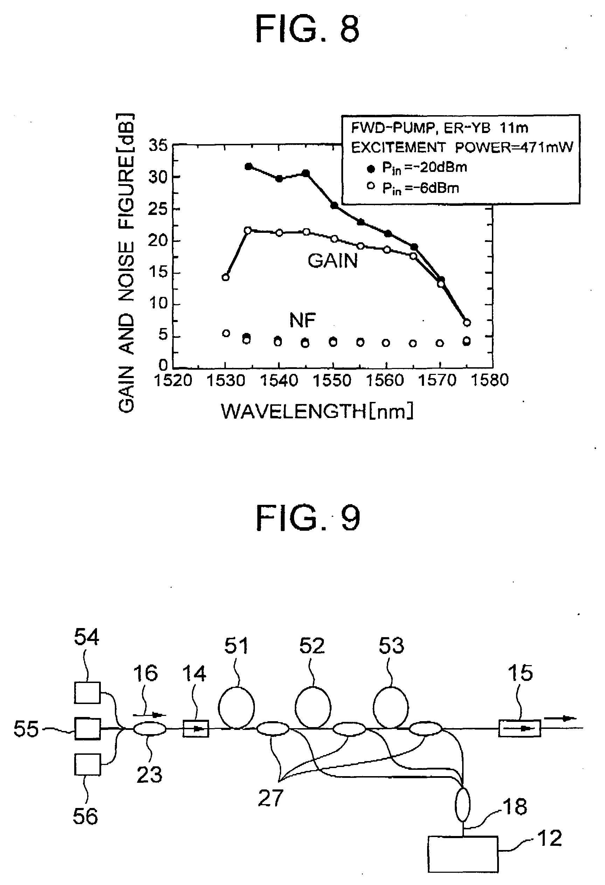

A dependency of a signal gain and a noise figure on an input signal wavelength is shown in Fig.8 when the excitation light source was disposed in front of the apparatus and beams were incident from the wavelength multiplexing coupler 28 in the configuration of Fig.3. The gain was about 32 dB when the signal was small (input of -20 dBm). A noise figure of about 3.5 dB could be obtained in the wavelength from 1530 nm to 1580 nm, and this value is more excellent than a value of 3.6 dB to 4.2 dB at the 1060 nm excitation.

The Yb:YAG laser can provide a low noise fiber amplifier.

### Third Embodiment

A 1.47 µm range thulium (Tm)-doped fluoride fiber amplifier having an Yb:YAG laser as an excitation light source will be described as a third embodiment of the present invention.

A base level absorption of the thulium from the base level to a ³H₅ level, a successive non-radiation relaxation and a transition accompanied with an absorption at an excited state from ³H₄ to ³F₂ are present in the neighborhood of a wavelength of 1050 nm (Japanese patent No.2,688,303). The thulium-doped fluoride fiber amplifier can be excited at a higher efficiency by oscillating the Yb:YAG laser at 1050 nm.

In Fig.3, Yb:YAG laser beams (1050 nm) were incident on the amplification fiber 11 which was the thulium-doped fluoride fiber, by way of the wavelength multiplexing coupler 28. Since the thulium-doped fluoride fiber and an ordinary silica fiber could not be fused and connected with each other, a module including the thulium-doped fluoride fiber and high NA silica fibers connected at the both ends thereof in a matching state was employed. A 1.47 µm range wavelength variable semiconductor laser was used as a light source of the signal ray 16. A small signal gain of 30 dB or more, and a saturation output of about 21 dBm (126 mW) were obtained by employing the Yb:YAG laser having an output of 1W. The employed fiber had a thulium (Tm³⁺) concentration of 2000 ppm, a length of 10 m and a core diameter of 2.4 µm.

### Fourth Embodiment

A 1.3 µm range praseodymium-doped fluoride fiber amplifier having an Yb:YAG laser will be described as a fourth embodiment of the present invention.

Praseodymium has an absorption spectrum having a central wavelength of 1020 nm and an absorption width of about 40 nm (Oishi, "The Review of Laser Engineering" vol.25, No.2, p.139∼, 1997). A high output and high efficiency amplification operation could be performed at a 1.3 µm range by tuning an Yb:YAG laser oscillation wavelength to 1030 nm. In the present embodiment, the amplification fiber 11 of Fig.3 was replaced with the praseodymium-doped fluoride fiber, and a 1.3 µm range wavelength variable semiconductor laser was used. The employed fiber had a praseodymium (Pr³⁺) concentration of 500 ppm, a length of 22 m and a core diameter of 1.5 µm. A Yb:YAG laser ray was incident on the praseodymium-doped fluoride fiber by way of the wavelength multiplexing coupler 28 as shown in Fig.3. A small signal gain of 42 dB, and a saturation output of 23 dBm could be obtained at 1 W incident.

These embodiments exhibit that the higher output, the higher efficiency and the wavelength variability possessed by the Yb:YAG laser can operate a variety of fiber amplifiers at a higher output and a higher efficiency.

Among the Er-Yb-doped silica fiber amplifiers, the Tm-doped fluoride fiber amplifiers and the Pr-doped fluoride fiber amplifiers, two or more amplifiers can be selected and arbitrarily connected among one another in series or in parallel to which beams are supplied by employing one or more Yb:YAG lasers as the excitation light sources.

Referring to Fig.9, a typical example of the fourth embodiment will be described. In Fig.9, description of similar elements to those of Fig.3 is omitted by affixing the same numerals thereto.

As shown therein, a laser ray of an Yb:YAG is divided into three by employing a coupler to separately supply excitation power to the three fiber amplifiers (amplification fibers 51, 52 and 53). As light sources for signal rays, a 1.3 µm range wavelength variable light source 54, a 1.47 µm range wavelength variable light source 55 and a 1.55 µm range wavelength variable light source 56 are disposed. The Pr fiber amplifier can be also operated at a higher efficiency by separately exciting the Pr fibers by way of a wavelength multiplexing coupler after another Yb:YAG laser (1030 nm oscillation) is disposed in Fig.9 because an excitation efficiency of the Pr fiber is higher at the 1030 nm excitation. In this manner, higher efficiency amplifying operations can be performed at 1.3 µm, 1.47 µm and 1.55 µm, and an ultra broad band optical telecommunication can be achieved.

### Fifth Embodiment

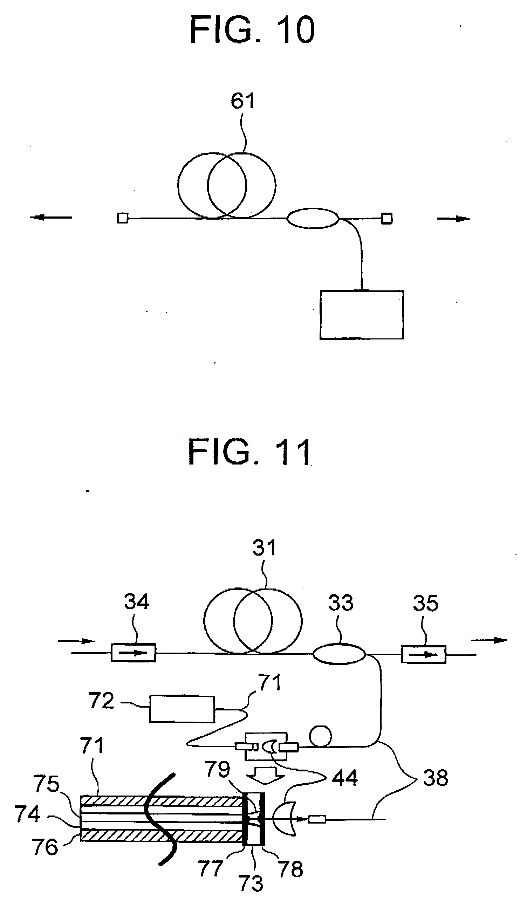

A fiber laser in accordance with a fifth embodiment shown in Fig.10 includes an Yb:YAG laser as an excitation light source. Yb:YAG laser beams were incident from a wavelength multiplexing coupler by employing an erbium-ytterbium-doped silica fiber as an oscillation fiber 61. A laser resonator utilized a Fresnel reflection by employing a fiber having a perpendicularly cleaved end. An Er-Yb fiber similar to that of the first embodiment was employed. A fiber laser output over 200 mW (@1.55 µm range) was obtained at excitation power of 500 mW. This indicated that application to the fiber laser could be easily performed by employing the Yb:YAG laser as the excitation light source.

### Sixth Embodiment

A fiber amplifier of a sixth embodiment includes, as shown in Fig.11, a multi-mode fiber 71 one end of which is connected to a fiber bonded multi-mode semiconductor laser 72 and the other is connected to a microchip 73. The multi-mode fiber 71 includes multi-mode clad 74 on the periphery of a multi-mode fiber core 75, and the outer surface thereof is covered with a cable covering 76. The microchip was obtained by processing an Yb:YAG laser crystal to a thickness of about 200 µm and a sectional area of about 4 mm², and two dielectric multi-layered films having a function as a resonator mirror were coated on the both end surfaces (rear mirror coating 77 and output mirror coating 78). Laser oscillation was performed on the both end surfaces of the microchip crystal. An Yb concentration is required to be established as high as to 25 atomic % in order to effectively absorb excitation beams 79. However, reduction of an upper level life (concentration quenching) does not occur noticeably up to about 50 atomic % in the Yb:YAG, and no growth distortion due to the high concentration addition in the crystal growth is reported to occur. Accordingly, the concentration about 25 atomic % arises no problem.

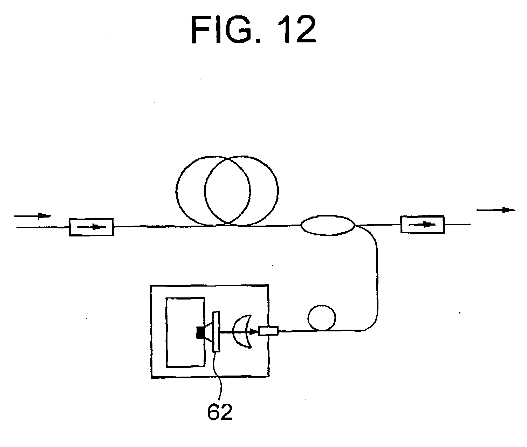

Such a microchip structure enables the direct excitation of the microchip crystal by disposing the multi-mode semiconductor laser closely to the microchip crystal, and, of course, the excitation of the microchip crystal can be conducted by using a micro-lens. The microchip crystal can be packed in the package for the semiconductor laser to enable extreme miniaturization. When a fiber bonded semiconductor laser is employed as the excitation light source as shown in Fig.12, the microchip crystal 62 may be directly bonded to the fiber output end.

Since the above embodiments are described only for examples, the present invention is not limited to the above embodiments and various modifications or alternations can be easily made therefrom by those skilled in the art without departing from the scope of the present invention.

## Claims

1. A laser amplifier characterized by comprising an ytterbium-doped solid-state laser for generating an excitation light, and an amplifying element including a gain medium containing a rare-earth element, for adding a signal light to amplify the signal light by using the excitation light.

2. The laser amplifier as defined in claim 1, wherein the ytterbium-doped solid-state laser (12) includes a laser crystal formed by ytterbium-doped Y₃Al₅O₁₂.

3. The laser amplifier as defined in claim 1, wherein the ytterbium-doped solid-state laser (12) includes a laser medium having a microchip structure.

4. The laser amplifier as defined in claim 1, wherein the rare-earth element is selected from the group consisting of thulium, praseodymium and combination of erbium and ytterbium.

5. The laser amplifier as defined in claim 1, wherein the medium is selected from the group consisting of quartz glass and fluorozirconate glass containing the rare-earth element.

6. The laser amplifier as defined in claim 1, wherein the medium is an optical fiber.

7. The laser amplifier as defined in claim 1, wherein a plurality of the laser amplifiers are connected in series among one another.

8. The laser amplifier as defined in claim 1, wherein a plurality of the laser amplifiers are connected in parallel among one another.

9. A laser oscillator characterized by comprising an ytterbium-doped solid-state laser (12) for generating an excitation light, and an oscillating element (11) including a gain medium containing a rare-earth element, for adding a signal light to oscillate the signal light by using the excitation light.

10. The laser oscillator as defined in claim 9, wherein the ytterbium-doped solid-state laser (12) includes a laser crystal formed by ytterbium-doped Y₃Al₅O₁₂.

11. The laser amplifier as defined in claim 9, wherein the ytterbium-doped solid-state laser (12) includes a laser medium having a microchip structure.

12. The laser amplifier as defined in claim 9, wherein the rare-earth element is selected from the group consisting of thulium, praseodymium and combination of erbium and ytterbium.

13. The laser amplifier as defined in claim 9, wherein the medium is selected from the group of consisting of quartz glass and fluorozirconate glass containing the rare-earth element.

14. The laser amplifier as defined in claim 9, wherein the medium is an optical fiber.
